# FASCICULE DE BREVET EUROPEEN

(11) **EP 3 233 527 B1**
(45) Date de publication et mention de la délivrance du brevet: **06.02.2019**
(21) Numéro de dépôt: 15805195.3
(22) Date de dépôt: 07.12.2015
(51) Int. Cl.: B60C 1/00, C08K 3/36, C08K 5/521, C08L 23/22, C08L 23/28

(54) **PNEU NEIGE À ADHÉRENCE AMÉLIORÉE**
SCHNEEREIFEN MIT VERBESSERTEM GRIFF
SNOW TYRE WITH IMPROVED GRIP

(30) Priorité: 15.12.2014 FR 1462393
(43) Date de publication de la demande: 25.10.2017
(73) Titulaire: Compagnie Générale des Etablissements Michelin, 63000 Clermont-Ferrand (FR); Michelin Recherche et Technique S.A., 1763 Granges-Paccot (CH)
(72) Inventeur: MORIYAMA, Masahiko, Tokyo 163-1073 (JP); DOTSON, Michael, Edward, Tokyo 163-1073 (JP)
(74) Mandataire: Regimbeau
(86) Numéro de dépôt international: PCT/EP2015/078851
(87) Numéro de publication internationale: WO 2016/096510

(56) Documents cités:
- EP-A1- 1 772 489
- WO-A1-2011/120966
- WO-A1-2012/069565

## Description

### 1. DOMAINE DE L'INVENTION

Le domaine de l'invention est celui des compositions caoutchouteuses utilisées comme bandes de roulement de pneus pour véhicules, plus précisément des compositions de caoutchouc pour bandes de roulement de pneus dits « neige » ou « hiver » aptes à rouler sur des sols recouverts de neige (en anglais appelés « *snow tyres* » ou « *winter tyres* »).

De manière connue, ces pneus neige repérés par une inscription M+S, M.S. ou encore M&S, marquée sur leurs flancs, se caractérisent par un dessin de la bande de roulement et une structure destinés avant tout à assurer dans la boue et la neige fraîche ou fondante un comportement meilleur que celui des pneus du type routier (en anglais appelés *« road type tyre »*) conçus pour rouler sur des sols non enneigés.

### 2. ETAT DE LA TECHNIQUE

Les sols enneigés, dits « sols blancs », ont pour caractéristique de présenter un faible coefficient de frottement, ce qui a conduit depuis longtemps au développement de pneus neige comportant des bandes de roulement à base de compositions de caoutchouc de formulations spécifiques.

Toutefois, il est bien connu que la performance d'adhérence sur des sols secs ou mouillés, non enneigés ni verglacés, dits « sols noirs », des pneus neige comportant de telles bandes de roulement est généralement inférieure à celle des pneus routiers usuels dont les bandes de roulement sont généralement à base de compositions de caoutchouc de formulations différentes.

### 3. BREVE DESCRIPTION DE L'INVENTION

Or, au cours de leurs recherches sur la technologie ci-dessus, les Demanderesses ont découvert une formulation nouvelle spécifique qui permet d'améliorer les performances d'adhérence sur sol sec ou mouillé des pneus de type neige, ceci sans détériorer la performance d'adhérence sur la neige.

Ainsi l'invention a pour objet un pneu neige dont la bande de roulement comporte une composition de caoutchouc comprenant au moins :
- 50 à 100 pce d'un caoutchouc butyl ;
- optionnellement, 0 à 50 pce d'un autre caoutchouc diénique ;
- 50 à 200 pce d'une charge inorganique renforçante ;
- plus de 30 phr d'un plastifiant liquide phosphate présentant une température de transition vitreuse (notée Tg) inférieure à -80°C.

Les pneus neige de l'invention sont particulièrement destinés à équiper des véhicules à moteur de type tourisme, incluant les véhicules 4x4 (à quatre roues motrices) et véhicules SUV (*"Sport Utility Vehicles"*), comme des véhicules industriels choisis en particulier parmi camionnettes et poids-lourd (i.e. bus, engins de transport routier tels que camions).

L'invention concerne les pneus ci-dessus tant à l'état cru (i.e., avant cuisson) qu'à l'état cuit (i.e., après réticulation ou vulcanisation).

L'invention ainsi que ses avantages seront aisément compris à la lumière de la description et des exemples de réalisation qui suivent.

### 4. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère ou caoutchouc (du total des élastomères si plusieurs élastomères sont présents).

Toutes les valeurs de température de transition vitreuse (Tg) sont mesurées de manière connue par DSC (*« Differential Scanning Calorimetry »*) selon la norme ASTM D3418 (1999).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le pneu neige de l'invention a donc pour caractéristique essentielle que sa bande de roulement comporte une composition de caoutchouc comprenant au moins :
- 50 à 100 pce d'un (au moins un, c'est-à-dire un ou plusieurs) caoutchouc butyl ;
- optionnellement, 0 à 50 pce d'un (au moins un, c'est-à-dire un ou plusieurs) caoutchouc diénique autre qu'un caoutchouc butyl ;
- 50 à 200 pce d'une (au moins une, c'est-à-dire une ou plusieurs) charge inorganique renforçante ;
- plus de 30 phr d'un (au moins un, c'est-à-dire un ou plusieurs) plastifiant liquide du type phosphate présentant une Tg inférieure à -80°C.

Cette formulation spécifique est décrite en détail ci-après.

### 4-1. Caoutchouc butyl

Par élastomère (ou "caoutchouc", les deux étant considérés comme synonymes) du type "diénique", doit être compris, de manière connue, un élastomère issu au moins en partie (i.e., un homopolymère ou un copolymère) de monomères diènes (i.e., de monomères porteurs de deux doubles liaisons carbone-carbone, qu'elles soient conjuguées ou non).

Ces élastomères diéniques peuvent de manière bien connue être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyl ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant rappelées, la composition de caoutchouc formant la bande de roulement du pneu neige de l'invention a pour caractéristique essentielle de comporter, à titre d'élastomère diénique, de 50 à 100 pce, de préférence de 70 à 100 pce de caoutchouc butyl. Ce caoutchouc butyl peut être utilisé seul ou en association avec 0 à 50 pce, de préférence 0 à 30 pce d'un ou plusieurs autre(s) élastomère(s) diénique(s) optionnel(s).

Par caoutchouc butyl, on entend de manière connue un copolymère d'isobutylène et d'isoprène (en abrégé IIR), ainsi que les versions halogénées, de préférence chlorées (CIIR) ou bromées (BIIR), de ce type de copolymère.

Un mode de réalisation plus préféré de l'invention consiste à utiliser de 80 à 100 pce, en particulier de 90 à 100 pce de caoutchouc butyl, le complément optionnel (de 0 à 20 pce, en particulier de 0 à 10 pce) étant constitué par au moins un autre élastomère ou caoutchouc diénique, différent par définition d'un caoutchouc butyl, plus préférentiellement choisi dans le groupe constitué par le caoutchouc naturel, les polyisoprènes de synthèse, les copolymères d'isoprène, les polybutadiènes, les copolymères de butadiène et leurs mélanges.

Les copolymères de butadiène sont choisis en particulier dans le groupe constitué par les copolymères de butadiène-styrène (SBR), les copolymères d'isoprène-butadiène (BIR), les copolymères d'isoprène-butadiène-styrène (SBIR) et les mélanges de tels copolymères ; parmi les copolymères d'isoprène, on citera aussi les copolymères d'isoprène-styrène (SIR).

Selon un mode de réalisation particulier, l'autre élastomère diénique est un polybutadiène (BR) ou un copolymère à base de styrène et butadiène tel que par exemple un SBR, notamment portant d'une fonction SiOR, R étant l'hydrogène ou un radical hydrocarboné, tel que décrit notamment dans la demande WO 2012/069565.

Selon un autre mode de réalisation particulier, l'autre élastomère diénique est du caoutchouc naturel ou un polyisoprène de synthèse ; parmi les polyisoprènes de synthèse, sont utilisés de préférence des polyisoprènes ayant un taux (% molaire) de liaisons cis-1,4 supérieur à 90%, plus préférentiellement encore supérieur à 98%.

### 4-2. Charge renforçante

Comme autre caractéristique essentielle, la composition de caoutchouc de la bande de roulement du pneu neige selon l'invention comprend une charge inorganique renforçante dans une proportion allant de 50 à 200 pce, de préférence de 80 à 160 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques conviennent notamment des charges minérales du type siliceuses, en particulier de la silice (SiO₂), ou du type alumineuses, en particulier de l'alumine (Al₂O₃). La silice utilisée peut être toute silice connue de l'homme du métier, notamment toute silice précipitée ou pyrogénée de préférence pyrogénée présentant une surface BET ainsi qu'une surface spécifique CTAB toutes deux inférieures à 450 m²/g, de préférence de 20 à 400 m²/g. De telles silices peuvent être couvertes ou non. A titre de silice de basse surface spécifique, on citera la « Sidistar R300 » de la société Elkem Silicon Materials. A titres de silices précipitées hautement dispersibles (dites "HDS"), on citera par exemple les silices « Ultrasil 7000 » et « Ultrasil 7005 » de la société Evonik, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837. A titre de silices de pyrogénation, on citera par exemple « CAB-O-SIL S-17D » de la société Cabot, « HDK T40 » de la société Wacker, « Aeroperl 300/30 », « Aerosil 380 », « Aerosil 150 » ou « Aerosil 90 » de la société Evonik. De telles silices peuvent être recouvertes comme par exemple la « CAB-O-SIL TS-530 » de la société Cabot recouverte avec l'hexaméthyldisilazane ou la « CAB-O-SIL TS-622 » de la société Cabot recouverte avec le diméthyldichlorosilane.

La charge inorganique utilisée, en particulier s'il s'agit de silice, a de préférence une surface BET comprise entre 20 et 400 m²/g, plus préférentiellement comprise entre 60 et 300 m²/g.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Avantageusement le taux de charge inorganique renforçante est compris dans un domaine allant de 100 à 150 pce, plus avantageusement de 110 à 140 pce.

Selon un mode de réalisation préférentiel de l'invention, la charge inorganique renforçante comprend de 50 à 100% en masse de silice, plus préférentiellement de 80 à 100% en masse de silice.

Selon un autre mode de réalisation avantageux, la composition de caoutchouc de la bande de roulement du pneu neige conforme à l'invention, peut comporter du noir de carbone. Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante au caoutchouc diénique, on utilise de manière bien connue un agent de couplage (ou agent de liaison) destiné à assurer une connexion suffisante, de nature chimique et/ou physique, entre la charge inorganique (surface de ses particules) et le caoutchouc diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 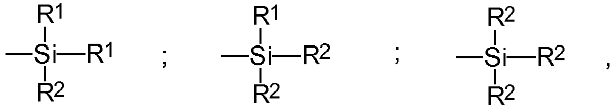
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemples d'agents de couplage autres qu'un alkoxysilane polysulfuré, on citera notamment des POS (polyorganosiloxanes) bifonctionnels ou encore des polysulfures d'hydroxysilane (R²= OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685. Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### 4-3. Plastifiant liquide phosphate

Une autre caractéristique essentielle de la composition de caoutchouc de la bande de roulement du pneu neige selon l'invention est de comporter plus de 30 phr d'un plastifiant phosphate liquide (à 23°C) présentant une Tg inférieure à -80°C.

A titre d'exemples de plastifiants phosphates préférentiels, on citera ceux qui contiennent de 12 à 30 atomes de carbone ; des exemples de tels composés sont le trioctyle phosphate (spécialement tri-2-éthylhexyle phosphate), 2-éthylhexyle diphényle phosphate, tricrésyle phosphate, dodécyldiphényle phosphate, tri-butoxyéthyle phosphate et crésyl diphényle phosphate.

Ces phosphates préférentiels sont bien connus et disponibles commercialement ; à titre d'exemple, on peut citer le trioctyle phosphate (C₂₄ H₅₁ O₄ P) commercialisé notamment sous la dénomination "*Disflamoll* TOF" par la société Lanxess.

Préférentiellement, le taux de ce plastifiant liquide phosphate est au moins égal à 40 pce, en particulier compris dans un domaine de 40 à 100 pce ; plus préférentiellement, il est au moins égal à 50 pce, notamment compris dans un domaine de 50 à 90 pce.

La Tg de ce plastifiant liquide phosphate est de préférence inférieure à -90°C, plus préférentiellement encore inférieure à -100°C.

Ce plastifiant liquide phosphate défini ci-dessus peut remplir à lui seul la fonction de système plastifiant dans la composition de caoutchouc formant la bande de roulement du pneu neige de l'invention ; mais il pourrait aussi être associé à un (au moins un) autre agent plastifiant, ce dernier pouvant être liquide ou solide à température ambiante.

De préférence, cette composition de caoutchouc selon l'invention est dépourvue ou comporte moins de 30 pce, de préférence moins de 20 pce, d'un plastifiant liquide autre que le plastifiant phosphate.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C) et sous pression atmosphérique, ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Cet agent plastifiant liquide, autre qu'un plastifiant phosphate, peut être choisi notamment dans le groupe constitué par les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters (autres que phosphates), les plastifiants sulfonates et les mélanges de ces composés. Selon un mode de réalisation particulier de l'invention, l'autre plastifiant liquide peut être également une huile végétale telle que décrite par exemple dans la demande WO 2012/069565.

Selon un autre mode de réalisation préférentiel, cette composition de caoutchouc est dépourvue ou comporte moins de 20 pce, de préférence moins de 10 pce, de plastifiant solide tel que par exemple une résine hydrocarbonée thermoplastique.

Cette résine hydrocarbonée thermoplastique peut être choisie notamment dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

### 4-4. Additifs divers

Les compositions de caoutchouc des bandes de roulement des pneus selon l'invention peuvent comporter également tout ou partie des additifs usuels habituellement utilisés dans les compositions de caoutchouc destinées à la fabrication de bandes de roulement de pneus, notamment pneus hiver, des charges autres que celles précitées, par exemple des charges non renforçantes comme la craie, ou bien des charges lamellaires comme le kaolin, le talc, des pigments, des agents de protection tels que cires anti-ozone, anti-ozonants chimiques, anti-oxydants, des résines renforçantes (tels que résorcinol ou bismaléimide), des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs ou retardateurs de vulcanisation, des activateurs de vulcanisation.

Ces compositions peuvent également contenir des activateurs de couplage lorsqu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des amines, des polyorganosiloxanes hydroxylés ou hydrolysables.

### 4-5. Préparation des compositions de caoutchouc

Les compositions utilisées dans les bandes de roulement des pneus de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le ou les élastomères diéniques avec la charge inorganique renforçante, l'agent de couplage, le cas échéant le noir de carbone, le plastifiant, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les caoutchoucs diéniques, le système plastifiant, la charge inorganique renforçante et l'agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement de pneu neige.

L'invention s'applique aux cas où les compositions de caoutchouc précédemment décrites forment une partie seulement de bandes de roulement du type composites ou hybrides, notamment celles constituées de deux couches radialement superposées de formulations différentes (structure dite *"cap-base"*), toutes deux sculptées et destinées à entrer en contact avec la route lors du roulage du pneumatique, au cours de la vie de ce dernier. La partie à base de la formulation précédemment décrite pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

### 5. EXEMPLES DE REALISATION DE L'INVENTION

### 5-1. Préparation d'une composition à base de caoutchouc butyl

On procède pour les essais qui suivent de la manière suivante : on introduit dans un mélangeur interne (taux de remplissage final : environ 70% en volume), dont la température initiale de cuve est d'environ 60°C, successivement le caoutchouc butyl, la silice, le noir de carbone, l'agent de couplage, le plastifiant liquide phosphate ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

La composition ainsi obtenue a pour formulation celle donnée (en pce) dans le tableau 1 annexé. Elle se caractérise notamment par 100 pce de caoutchouc butyl combinés à des taux très élevés de charge inorganique renforçante (dans cet exemple 125 pce) et de plastifiant phosphate liquide (dans cet exemple 60 pce).

Cette composition a été extrudée sous la forme d'une bande de roulement, pour être ensuite testée en pneu comme indiqué dans le paragraphe qui suit.

### 5-2. Essais de roulage en pneus neige

Les pneus neige de l'invention (notés P-2 dans le tableau 2) testés sont des pneus de type tourisme à carcasse radiale, de dimensions 205/55 R16. Ils ont été comparés à des pneus neige conventionnels (notés P-1 dans le tableau 2) dont la bande de roulement était formée d'une composition usuelle pour pneu hiver (à base de silice, d'un coupage BR et SBR, et d'un système plastifiant comportant une huile végétale et une résine polylimonène) telle que décrite par exemple dans WO 2012/069565 précitée (composition T1).

Les pneus ont été montés sur un véhicule automobile de marque « Volkswagen », modèle « Golf 6 », équipé d'un système de freinage ABS. Ils ont été soumis à divers tests de freinage d'urgence sur sol enneigé (température de -15°C), sol sec ou sol mouillé (température de 10°C), ou d'accélération sur sol enneigé (-15°C), comme indiqué dans le tableau 2 annexé.

Pour tester l'accélération sur sol enneigé, on mesure le temps nécessaire pour passer de 5 à 20 km/h. Pour tester le freinage sur sol enneigé, on mesure la distance nécessaire pour passer de 50 à 5 km/h lors d'un freinage d'urgence sur neige. Pour tester le freinage sur sol sec ou mouillé (béton bitumineux), on mesure la distance nécessaire lors d'un freinage brutal pour passer de 80 à 20 km/h sur sol arrosé ou pour passer de 100 à 0 km/h sur sol sec.

Les résultats obtenus sont rapportés dans le tableau 2, en unités relatives, la base 100 ayant été retenue pour les pneus témoins (P-1). Dans tous les cas, une valeur supérieure à celle du témoin, arbitrairement fixée à 100, indique un résultat amélioré, c'est-à-dire une distance de freinage plus courte ou une accélération plus rapide.

On constate de manière inattendue que les pneus neige selon l'invention présentent des performances d'adhérence sur sol sec et sur sol mouillé qui sont toutes deux notablement améliorées, d'environ 10%. Fait remarquable, ces résultats sont obtenus sans pénaliser la performance (accélération et freinage) sur sol enneigé.

**Tableau 1**

| | |
|---|---|
| BIIR(1) | 100 |
| silice (2) | 125 |
| agent de couplage (3) | 10 |
| noir de carbone (4) | 4 |
| plastifiant phosphate liquide (5) | 60 |
| acide stéarique | 1 |
| cire anti-ozone | 1.5 |
| antioxydant (6) | 2.5 |
| DPG (7) | 2.5 |
| ZnO | 1.5 |
| accélérateur (8) | 1.5 |
| soufre | 1.5 |

| | |
|---|---|
| (1) caoutchouc bromobutyl ; (2) Silice « Zeosil 1165 MP » de la société Rhodia (type HDS) ; (3) agent de couplage TESPT (« Si69 » de la société Evonik) ; (4) grade ASTM N234 (société Cabot) ; (5) tris(2-éthylhexyl)phosphate, "Disflamoll TOF" from LANXESS Company (Tg = -105°C) (CAS N° 78-42-2) (6) N-(1,3-diméthylbutyl)-N'-phényl-p-phénylènediamine, de la société Flexsys ; (7) Diphénylguanidine (« Perkacit » DPG de la société Flexsys) ; (8) N-dicylohexyl-2-benzothiazol-sulfénamide (« Santocure CBS » de la société Flexsys). | |

**Tableau 2**

| Tests d'adhérence sur Pneus : | P-1 | P-2 |
|---|---|---|
| Accélération sur neige (-15°C) | 100 | 100 |
| Freinage sur neige (-15°C) | 100 | 100 |
| Freinage sur sol sec (+10°C) | 100 | 108 |
| Freinage sur sol mouillé (+10°C) | 100 | 111 |

## Revendications

1. Pneu neige dont la bande de roulement comporte une composition de caoutchouc comprenant au moins :
- 50 à 100 pce d'un caoutchouc butyl ;
- optionnellement, 0 à 50 pce d'un autre caoutchouc diénique ;
- 50 à 200 pce d'une charge inorganique renforçante ;
- plus de 30 pce d'un plastifiant liquide phosphate présentant une température de transition vitreuse notée Tg inférieure à -80°C.

2. Pneu selon la revendication 1, le taux de caoutchouc butyl étant compris dans un domaine de 70 à 100 pce.

3. Pneu selon la revendication 2, le taux de caoutchouc butyl étant compris dans un domaine de 80 à 100 pce.

4. Pneu selon l'une quelconque des revendications 1 à 3, l'autre caoutchouc diénique étant choisi dans le groupe constitué par le caoutchouc naturel, les polyisoprènes de synthèse, les copolymères d'isoprène, les polybutadiènes, les copolymères de butadiène et les mélanges de ces élastomères.

5. Pneu selon la revendication 4, l'autre caoutchouc diénique étant un polybutadiène ou un copolymère à base de styrène et butadiène.

6. Pneu selon la revendication 4, l'autre caoutchouc diénique étant du caoutchouc naturel ou un polyisoprène de synthèse.

7. Pneu selon l'une quelconque des revendications 1 à 6, dans lequel le taux de charge inorganique renforçante est compris dans un domaine allant de 80 à 160 pce.

8. Pneu selon la revendication 7, dans lequel le taux de charge inorganique renforçante est compris dans un domaine allant de 100 à 150 pce.

9. Pneu selon l'une quelconque des revendications 1 à 8, dans lequel la charge inorganique renforçante comprend de 50 à 100% en masse de silice.

10. Pneu selon l'une quelconque des revendications 1 à 9, dans lequel le taux de plastifiant liquide phosphate est au moins égal à 40 pce.

11. Pneu selon la revendication 10, dans lequel le taux de plastifiant liquide phosphate est au moins égal à 50 pce.

12. Pneu selon l'une quelconque des revendications 1 à 11, dans lequel la Tg du plastifiant liquide phosphate est inférieure à -90°C.

13. Pneu selon la revendication 12, dans lequel la Tg du plastifiant liquide phosphate est inférieure à -100°C.

14. Pneu selon l'une quelconque des revendications 1 à 13, dans lequel la composition de caoutchouc est dépourvue ou comporte moins de 30 pce d'un plastifiant liquide autre que le plastifiant liquide phosphate.

15. Pneu selon l'une quelconque des revendications 1 à 14, dans lequel la composition de caoutchouc est dépourvue ou comporte moins de 20 pce de plastifiant solide.

## Patentansprüche

1. Schneereifen, dessen Lauffläche eine Kautschukzusammensetzung aufweist, die mindestens umfasst:
- 50 bis 100 phe eines Butylkautschuks;
- optional 0 bis 50 phe eines anderen Dienkautschuks;
- 50 bis 200 phe eines verstärkenden anorganischen Füllstoffs;
- über 30 phe eines flüssigen Phosphatweichmachers mit einer Glasübergangstemperatur Tg unter -80 °C.

2. Reifen nach Anspruch 1, wobei der Gehalt an Butylkautschuk in einem Bereich von 70 bis 100 phe liegt.

3. Reifen nach Anspruch 2, wobei der Gehalt an Butylkautschuk in einem Bereich von 80 bis 100 phe liegt.

4. Reifen nach einem der Ansprüche 1 bis 3, wobei der andere Dienkautschuk aus der Gruppe ausgewählt ist, die von dem Naturkautschuk, den synthetischen Polyisoprenen, den Isopren-Copolymeren, den Polybutadienen, den Butadien-Copolymeren und den Gemischen dieser Elastomere gebildet ist.

5. Reifen nach Anspruch 4, wobei der andere Dienkautschuk ein Polybutadien oder ein Copolymer auf der Basis von Butadienstyrol ist.

6. Reifen nach Anspruch 4, wobei der andere Dienkautschuk Naturkautschuk oder ein synthetisches Polyisopren ist.

7. Reifen nach einem der Ansprüche 1 bis 6, wobei der Gehalt an verstärkendem anorganischem Füllstoff in einem Bereich von 80 bis 160 phe liegt.

8. Reifen nach Anspruch 7, wobei der Gehalt an verstärkendem anorganischem Füllstoff in einem Bereich von 100 bis 150 phe liegt.

9. Reifen nach einem der Ansprüche 1 bis 8, wobei der verstärkende anorganische Füllstoff 50 bis 100 Ma% Siliciumdioxid umfasst.

10. Reifen nach einem der Ansprüche 1 bis 9, wobei der Gehalt an flüssigem Phosphatweichmacher mindestens gleich 40 phe beträgt.

11. Reifen nach Anspruch 10, wobei der Gehalt an flüssigem Phosphatweichmacher mindestens gleich 50 phe beträgt.

12. Reifen nach einem der Ansprüche 1 bis 11, wobei die Tg des flüssigen Phosphatweichmachers unter -90 °C beträgt.

13. Reifen nach Anspruch 12, wobei die Tg des flüssigen Phosphatweichmachers unter -100 °C beträgt.

14. Reifen nach einem der Ansprüche 1 bis 13, wobei die Kautschukzusammensetzung ohne flüssigen Weichmacher ist oder unter 30 phe eines flüssigen Weichmachers aufweist, der kein flüssiger Phosphatweichmacher ist.

15. Reifen nach einem der Ansprüche 1 bis 14, wobei die Kautschukzusammensetzung ohne festen Weichmacher ist oder unter 20 phe eines festen Weichmachers aufweist.

## Claims

1. Snow tyre of which the tread comprises a rubber composition comprising at least:
- 50 to 100 phr of a butyl rubber;
- optionally, 0 to 50 phr of another diene rubber;
- 50 to 200 phr of an inorganic reinforcing filler;
- more than 30 phr of a liquid phosphate plasticiser having a glass transition temperature noted as Tg less than -80°C.

2. Tyre according to claim 1, the content of butyl rubber being in a range from 70 to 100 phr.

3. Tyre according to claim 2, the content of butyl rubber being in a range from 80 to 100 phr.

4. Tyre according to any of claims 1 to 3, the other diene rubber being chosen from the group consisting of natural rubber, synthetic polyisoprene, copolymers of isoprene, polybutadienes, copolymers of butadiene and mixtures of these elastomers.

5. Tyre according to claim 4, the other diene rubber being a polybutadiene or a styrenebutadiene copolymer.

6. Tyre according to claim 4, the other diene rubber being natural rubber or a synthetic polyisoprene.

7. Tyre according to any of claims 1 to 6, wherein the content of inorganic reinforcing filler is within a range from 80 to 160 phr.

8. Tyre according to claim 7, wherein the content of inorganic reinforcing filler is within a range from 100 to 150 phr.

9. Tyre according to any of claims 1 to 8, wherein the inorganic reinforcing filler comprises from 50 to 100% by weight of silica.

10. Tyre according to any of claims 1 to 9, wherein the content of liquid phosphate plasticiser is at least equal to 40 phr.

11. Tyre according to claim 10, wherein the content of liquid phosphate plasticiser is at least equal to 50 phr.

12. Tyre according to any of claims 1 to 11, wherein the Tg of the liquid phosphate plasticiser is less than -90°C.

13. Tyre according to claim 12, wherein the Tg of the liquid phosphate plasticiser is less than -100°C.

14. Tyre according to any of claims 1 to 13, wherein the rubber composition is devoid or comprises less than 30 phr of a liquid plasticiser other than the liquid phosphate plasticiser.

15. Tyre according to any of claims 1 to 14, wherein the rubber composition is devoid or comprises less than 20 phr of solid plasticiser.
